# EUROPÄISCHE PATENTSCHRIFT

(11) **EP 3 062 101 B1**
(45) Veröffentlichungstag und Bekanntmachung des Hinweises auf die Patenterteilung: **05.10.2022**
(21) Anmeldenummer: 16152869.0
(22) Anmeldetag: 27.01.2016
(51) Int. Cl.: G01N 29/26, G01N 29/28, G01N 29/22, G01N 29/265

(54) **VORRICHTUNG ZUR ULTRASCHALLPRÜFUNG GROSSVOLUMIGER PRÜFKÖRPER**
DEVICE FOR ULTRASONIC TESTING OF LARGE VOLUME TEST BODIES
DISPOSITIF DE VERIFICATION PAR ULTRASONS D'EPROUVETTES DE GRAND VOLUME

(30) Priorität: 26.02.2015 DE 102015102786
(43) Veröffentlichungstag der Anmeldung: 31.08.2016
(73) Patentinhaber: Salzgitter Mannesmann Forschung GmbH, 47259 Duisburg (DE)
(72) Erfinder: Schmitte, Till, 44807 Bochum (DE); Graff, Alfred, 45239 Essen (DE); Orth, Thomas, 45481 Mülheim (DE)
(74) Vertreter: Meissner, Peter E.

(56) Entgegenhaltungen:
- EP-A1- 0 472 252
- DE-A1-102008 037 516
- DE-C1- 4 237 378
- US-B1- 7 284 434

## Beschreibung

Die Erfindung betrifft eine Vorrichtung zur Ultraschallprüfung von Prüfkörpern, insbesondere aus Metall , *gemäß dem* Anspruch 1, bei der ein mit piezoelektrischen Schwingern versehener Prüfkopf in Phased-Array-Technik eingesetzt wird. Die Anzahl der Schwinger beträgt mindestens 2 , typischerweise können jedoch mindestens 16 und bis zu 256 oder mehr Schwinger vorhanden sein.

DE 102 08 501 A1 offenbart eine Vorrichtung mit einem Prüfkopf zur Ultraschallprüfung von Prüfkörpern, die ein blasenfreies Ankoppeln eines Koppelmittels an einer senkrechten Prüfkörperoberfläche ermöglicht, wobei das Koppelmittel während des Prüfvorgangs von unten nach oben zugeführt wird und einen Spalt zwischen Prüfkopf und Prüfkörper vollständig ausfüllt.

Die in einem Prüfkopf maximal aktivierbare Fläche der piezoelektrischen Schwinger einschließlich der Lücken (gaps) zwischen zwei Einzelschwingern wird nachfolgend als Prüfkopffläche definiert. Insbesondere werden nachfolgend relativ großflächige Prüfköpfe mit aktivierbaren Schwingerflächen betrachtet, die eine Fläche von mehr als 10 cm² aufweisen. Prüfköpfe mit großen Prüfkopfflächen und einer Vielzahl an Schwingern werden aus wirtschaftlichen Gründen wegen ihrer vergrößerten Prüfabdeckung vorteilhaft bei Prüfkörpern mit großer zu prüfender Oberfläche verwendet. Da mit zunehmender Prüfkopffläche größere Ultraschallleistungen in den Prüfkörper eingebracht werden können und damit auch die Eindringtiefe des Ultraschalls bei diesen Prüfköpfen erhöht ist, bietet sich ihre Verwendung insbesondere bei großvolumigen, langgestreckten Prüfkörpern an, die in Relation zum Querschnitt eine sehr viel größere Länge aufweisen und in Längsrichtung geprüft werden sollen.

Prüfkörper können beispielsweise Vollquerschnitte, wie Stangen, Knüppel oder auch Stranggussbrammen mit runder, rechteckiger oder quadratischer Querschnittgeometrie sein.

Auch bei zu prüfenden Hohlkörpern, wie z.B. Rohre oder Behälter, die im Vergleich zur Wanddicke eine sehr viel größere Länge aufweisen und deren Wand in Längsrichtung von der Stirnfläche aus geprüft werden soll, bietet sich bei großen Wanddicken von z.B. mehr als 5 cm für die Ultraschallprüfung der Einsatz von Prüfköpfen mit großer Prüfkopffläche an. Allgemein ist die Ultraschallprüfung metallischer Prüfkörper seit langem bekannt und bewährt. Ultraschallprüfungen werden angewandt, um produktionsbegleitend eventuell vorhandene Ungänzen in Werkstücken (z.B. Rohrwand oder Schweißnaht) wie beispielsweise Dopplungen, Risse, Kerben, Einwalzungen oder Poren zu detektieren. Darüber hinaus wird die Ultraschallprüfung auch zur Überprüfung der Maßhaltigkeit von Rohren, wie z.B. der Wanddicke, angewandt.

Bei der Prüfung werden z.B. nach dem Puls-Echoverfahren mit piezoelektrischen Schallwandlern Ultraschallimpulse erzeugt, die über ein Koppelmedium (z.B. Wasser oder Öl) in das Werkstück eingeleitet werden. Trifft der so von einem Ultraschallschwinger erzeugte Ultraschallimpuls auf ein Hindernis (z.B. Pore), wird dort das Ultraschallsignal durch Reflektion oder Diffraktion in seiner ursprünglichen Ausbreitung beeinflusst. Auf diese Weise kann der Schallstrahl sich so im Werkstück ausbreiten, dass Schallanteile zum Einschallort zurückkehren und anschließend von dem gleichen oder einem anderen Ultraschallwandler detektiert werden können. In vielen Fällen ist der Ultraschallwandler, der zur Erzeugung des Ultraschallpulses benutzt wird, mit dem zur Detektion verwendeten Ultraschallwandler identisch.

Bei dieser bekannten Ultraschallprüfung, bei der die Prüfung von Hand mit einem Prüfkopf mit einem einzigen Schwingerelement und einem Prüfkopfdurchmesser von z.B. 2 cm bzw. einer aktiven Schwingerfläche von 3,14 cm² durchgeführt wird, ist es wichtig, dass der Prüfkopf auf der Prüfkörperoberfläche plan und ohne im Koppelmittel eingeschlossene Luftblasen aufliegt, um keine Messfehler bzw. Messungenauigkeiten zu erzeugen. Üblicherweise wird dazu das Koppelmittel vor der Prüfung in einem dünnen Film auf die zu prüfende Oberfläche aufgetragen und der Prüfkopf auf die so benetzte Prüfkörperoberfläche aufgesetzt. Auch ist es möglich, den Prüfkopf über einen festen Körper als Zwischenstück an das mit Koppelmittel versehene Werkstück anzukoppeln, um z.B. Winkeleinschallungen zu ermöglichen. Auch können mit einem solchen Zwischenstück, auch Vorlaufkeil genannt, welches z.B. aus Kunststoff bestehen kann, Anpassungen an die jeweilige Kontur des Prüfkörpers vorgenommen werden.

Neben dieser Art der Ankopplung des Prüfkopfes an die Prüfkörperoberfläche gibt es noch die Ankopplung über eine in einer Prüfvorrichtung realisierten Koppelmittelvorlaufstrecke, also über eine Flüssigkeitssäule, die je nach Prüfaufgabe z.B. 10 bis 80 mm oder mehr betragen kann. Desweiteren ist die so genannte Tauchtechnik bekannt, bei der der Prüfkopf und die zu prüfende Oberfläche des Prüfkörpers in ein Wasserbad getaucht sind. Die Prüfung in Tauchtechnik wird z.B. für automatisierte Prüfungen an rauen Oberflächen eingesetzt, die eine direkte Ankopplung der Prüfvorrichtung an die Oberfläche des Prüfkörpers nicht erlauben.

Bekannte Ultraschallwandler, die zur Prüfung auf die mit Koppelmittel benetzte Oberfläche des Prüfkörpers aufgesetzt werden, sind in einem Gehäuse eingebaut und üblicherweise mit einer Vergussmasse aus Kunststoff darin fixiert, so dass ein luftspaltfreies Aufliegen des Ultraschallwandlers bzw. des Prüfkopfes auf der Prüfkörperoberfläche gewährleistet ist. Beim Verfahren des Prüfkopfes über die Oberfläche des Prüfkörpers muss zudem eine kontinuierliche und blasenfreie Ankopplung des Prüfkopfes über das Koppelmittel gewährleistet sein.

Um bei großen zu prüfenden Flächen im Sinne einer effektiven und damit wirtschaftlichen Prüfung eine möglichst große Prüfabdeckung des zu untersuchenden Prüfkörpers zu erreichen, ist aus der Offenlegungsschrift DE 10 2005 051 781 A1 ein Verfahren zur Ultraschallprüfung an Werkstücken bekannt, welches sich der Phased-Array Technik bedient. Hierbei werden mit den Phased-Array-Schwingern des Prüfkopfes, in denen zur kontrollierten Ultraschallaussendung und -detektion eine Vielzahl einzelner Ultraschallschwinger vorgesehen sind, Ultraschallwellen in einen Prüfkörper abhängig von Prüfkopfparametern unter einer großen Auswahl von Einschallwinkeln und vorzugebenden Fokussierbereichen angeregt und aus diesen Einschallbereichen empfangen.

Ein wichtiger Aspekt der Array-Technik ist die Fähigkeit, ein dynamisch veränderbares Ultraschallbündel zu erzeugen und so über einen "virtuellen Prüfkopf" mit beliebigen Einschallwinkeln innerhalb der Schallbündelcharakteristik des Einzelschwingers zu verfügen.

Ein schräg einfallendes Schallbündel wird erzeugt, indem eine bestimmte Anzahl an Schwingern eines Prüfkopfes zeitverzögert angesteuert wird, so dass eine Wellenfront mit dem gewünschten Winkel entsteht. Hierzu wird eine spezielle Gruppenstrahler-Elektronik verwendet, mit der der Winkel ausgewählt und damit die Zeitverzögerung elektronisch eingestellt wird. Der Einschallwinkel kann, falls gewünscht, von Impuls zu Impuls geändert werden. Diese zu einem bestimmten Zeitpunkt aktivierten Schwinger werden auch als "virtueller Prüfkopf' bezeichnet. Mit einem solchen virtuellen Prüfkopf ist es ebenfalls möglich, den Schallstrahl durch ein Prüfstück "hindurch zu schwenken", indem einzelne Gruppen von Schwingern eines großen Gruppenstrahlers einzeln angesteuert werden. Somit kann ein großer Prüfbereich durch einen elektronischen Scan abgedeckt werden.

Bekannt ist auch, dass der bei der Schallbündelschwenkung gezeigte Effekt dazu benutzt werden kann, bei entsprechender Auswahl von Ansteuerungsreihenfolgen und Impulsverzögerungen einen Schallstrahl dynamisch zu fokussieren. Wird dieses von Impuls zu Impuls verändert, so wird ein Fokuspunkt durch den Prüfling "hindurch gefahren". Die Kombination aus dynamischer Fokussierung und Schallbündelschwenkung bewirkt ein Schallbündel, das gleichzeitig fokussiert ist und unter einem Winkel einfällt.

Zur Durchführung einer solchen Messung regt gemäß Offenlegungsschrift DE 10 2012 025 535 A1 ein Steuergerät zumindest einen meist jedoch mehrere Ultraschallwandler des Mehrfachschwingkopfes für ein begrenztes kurzes Zeitintervall zur Einkopplung von Ultraschallwellen in den Prüfkörper an. Die dabei entstehenden eingekoppelten Ultraschallwellenpakete werden beispielsweise an Materialungänzen innerhalb des Prüfkörpers oder von den Außenwänden des Prüfkörpers reflektiert und gelangen als reflektierte Ultraschallwellen zu den nunmehr als Empfänger arbeitenden Ultraschallwandlern zurück, werden von diesen in Ultraschallsignale umgewandelt und an das Steuergerät zur Auswertung geleitet. Die Zeitspanne zwischen dem Beginn des Aussendevorganges und dem Ende des Empfangsvorganges der Ultraschallsignale wird zumeist als Messtakt bezeichnet.

Die Signalauswertung geschieht, indem die einzelnen in einem Messtakt empfangenen reflektierten Ultraschallsignale unter Berücksichtigung der bei der Einschallung zu Beginn des Messtaktes verwendeten Phasenverschiebung summiert werden und daraus ein Summensignal gebildet wird.

Der zeitliche Verlauf der empfangenen Ultraschallsignale stellt dann das sogenannte A-Bild oder A-Scan dar, welches das Ultraschallecho längs einer vorgegebenen Ausbreitungsrichtung im Werkstück zeigt.

Wird der Prüfkörper durch Schwenken des Schallbündels in verschiedenen Richtungen durchschallt, kann gemäß der Offenlegungsschrift DE 10 2012 025 535 A1 ein Sektorbild (B-Bild) rekonstruiert werden, welches sich aus einer Vielzahl von A-Bildern längs einer gegebenen Ausbreitungsrichtung zusammensetzt. Auch lässt sich daraus ein dreidimensionales Ultraschallbild erzeugen.

Die Rekonstruktion der Bilder aus den Messwerten erfolgt bei der bekannten bildgebenden Ultraschallprüfung z.B. mittels der sogenannten "Total Focusing Methode" (TFM).

Um zum Beispiel bei einem zylindrischen Prüfkörper mit einem Vollquerschnitt, der eine Länge a und einen Durchmesser b aufweist, wobei die Länge a im Vergleich zum Durchmesser b wesentlich größer ist (a>>b), das Volumen des Prüfkörpers komplett auf Fehler mit geringen Kosten für die Prüftechnik und die Prüfdurchführung prüfen zu können, wird die Prüfung sinnvollerweise von der Stirnseite des zylindrischen Prüfkörpers mit einem darauf aufgesetzten großflächigen Phased-Array-Prüfkopf durchgeführt, dessen Prüfkopffläche bzw. aktivierbare Schwingerfläche eine möglichst große Querschnittsfläche b des Prüfkörpers bedeckt oder diese sogar komplett überdeckt.

Eine große Prüfkopffläche ist notwendig, damit über die Vielzahl an Schwingerelementen des Prüfkopfes eine so große Schallleistung mit vergleichsweise niedriger Frequenz in den Prüfkörper eingeschallt werden kann, dass der Schall über die gesamte Länge des Prüfkörpers läuft, reflektiert wird und vom Empfänger wieder detektiert werden kann.

Bekannt ist ein solcher Prüfkopf für die Ultraschallprüfung zum Beispiel aus der Gebrauchsmusterschrift DE 20 2012 012 530 U1. Hier wird eine Vollwelle von der Stirnseite her in Längserstreckung der Welle mittels eines daran angekoppelten Phased-Array-Prüfkopfes ultraschallgeprüft, wobei der Phased-Array-Prüfkopf als zweidimensionales Matrix-Array ausgebildet ist, welches die Querschnittsfläche des zu prüfenden Querschnitts komplett abdeckt.

Die große Apertur des Prüfkopfes erlaubt dabei die Prüfung insbesondere in den tiefen Bereichen, während in der Nähe der Prüfoberfläche die Apertur verringert werden kann durch eine geringere Anzahl an aktivierten Schwingerelementen. Eine Optimierung wird durch die Fokussierungsmöglichkeiten der virtuellen Prüfköpfe unterstützt. Darüber hinaus ist aufgrund der Phased-Array-Technik das Schwenken des Schallstrahls unter kleinen Winkeln möglich, um so die Prüfung im gesamten Volumen des Prüfkörpers sicher zu stellen.

Probleme bestehen bei zunehmend größeren an die Prüfkörperoberfläche anzukoppelnden Prüfkopfflächen in der Führung des Prüfkopfes über die Oberfläche des Prüfkörpers und damit verbunden in einer nicht mehr sicherzustellenden planen Auflage des Prüfkopfes, so dass sich Schwankungen stationär in der Höhe des Spaltes im Bereich der aktiven Schwingerfläche wie auch dynamisch während des Verfahrens der Vorrichtung über die Prüfkörperoberfläche ergeben. Dies kann zu einer Veränderung der Amplituden der Echosignale führen. Zudem ist eine blasenfreie Ankopplung der Koppelflüssigkeit, insbesondere auch bei der Prüfung an senkrechten Prüfflächen, nicht mehr gewährleistet.

Während bei einer Prüfkopffläche mit nur einem Schwinger von beispielsweise weniger als 5 cm² eine problemlose Prüfung von Hand durchgeführt werden kann, ist, wie Versuche gezeigt haben, eine blasenfreie Ankopplung des Koppelmittels und ein konstantes Spaltmaß bei Prüfköpfen mit einer Vielzahl von Schwingern in Schwingerlinealen oder zweidimensionalen Matrix-Arrays und Prüfkopfflächen von mehr als 10 cm² nur noch schwer und bei mehr als 20 cm² praktisch gar nicht mehr zu realisieren.

Wird der Prüfkopf bei der Prüfung über die Oberfläche des Prüfkörpers bewegt, muss während der Relativbewegung der Koppelfläche permanent Koppelmittel blasenfrei zugeführt werden. Kann dies nicht sichergestellt werden, zum Beispiel wenn der Koppelmittelfilm auf der Prüffläche abreißt, ist eine einwandfreie Prüfung nicht mehr gewährleistet und es entsteht bei einem direkten Kontakt zwischen Prüfkopf und Prüffläche erhöhter Verschleiß am Prüfkopf.

Andererseits können bei einer großen Prüfkopffläche und einer planen Auflage des Prüfkopfes auf der mit Koppelmittel versehenen Prüfkörperoberfläche die Adhäsionskräfte zwischen Prüfkopf und Prüfkörper so groß werden, dass eine Relativbewegung nicht mehr möglichst ist und der Prüfkopf auf dem Prüfkörper quasi "festklebt" und nicht mehr bewegt werden kann.

Auch eine möglicherweise über einen definierten und gleichmäßigen mit Koppelmittel gefüllten Spalt von einem oder mehreren Millimetern zwischen Prüfkopf und Prüfkörperoberfläche zu realisierende abstandsgleiche Ankopplung des großflächigen Phased-Arrays-Prüfkopfes an die Prüfkörperoberfläche während der Relativbewegung zwischen Prüfkopf und Prüffläche und eine blasenfreie Zuführung des Koppelmittels wird mit zunehmender Prüfkopffläche problematisch. Ist der Spalt zu groß, fließt das Koppelmittel unkontrolliert aus dem Spalt, so dass eine durchgängige Ankopplung aller Schwinger nicht mehr gewährleistet ist und außerdem sehr viel Koppelmittel mit entsprechendem Pumpendruck permanent zugeführt werden muss. Dies ist insbesondere bei einer Ultraschallprüfung an einer senkrechten Prüfkörperoberfläche ein großes Problem. Ist der Abstand zur Prüfkörperoberfläche nicht gleichmäßig, gibt es im A-Bild ungleichmäßige Totzonen und Schwankungen in der Echohöhe, die eine Auswertung der reflektierten Ultraschallsignale sehr erschweren.

Insgesamt besteht bei der Ultraschallprüfung großvolumiger langgestreckter Prüfkörper das Problem, dass die bekannten Prüfvorrichtungen mit Prüfköpfen in Phased-Array-Technik mit großer Prüfkopffläche eine wirtschaftliche und zugleich qualitätssichere Prüfung, insbesondere an senkrechten Prüfflächen, noch nicht sicherstellen können.

Aufgabe der Erfindung ist es, eine Vorrichtung zur Ultraschallprüfung von Prüfkörpern, vorzugsweise aus Metall, mit Prüfköpfen in Phased-Array-Technik anzugeben, mit der eine qualitätssichere Ankopplung des Prüfkopfes und eine blasenfreie Zuführung des Koppelmittels bei Relativbewegungen zwischen Prüfkopf und Prüfkörperoberfläche und auch bei großen Prüfkopfflächen und an senkrechten Prüfflächen möglich ist.

Diese Aufgabe wird durch eine Vorrichtung zur Ultraschallprüfung von Prüfkörpern, insbesondere aus Metall, mit einem Prüfkopf gelöst, mit einer Anordnung von aktivierbaren Schwingerelementen in Phased-Array-Technik , wobei der Prüfkopf eine aktivierbare Schwingerfläche von mehr als 10 cm² aufweist, wobei der Prüfkopf in einem über die Oberfläche des Prüfkörpers verfahrbaren Gehäuse angeordnet und ein Koppelmittel zur Ankopplung des Prüfkopfes an die Prüfkörperoberfläche zwischen Prüfkopf und Oberfläche des Prüfkörpers zuführbar ist, wobei für eine blasenfreie Ankopplung des Prüfkopfes an die Oberfläche des Prüfkörpers *bei senkrechter Prüfung* das Gehäuse einen auf der Oberfläche des Prüfkörpers aufsetzbaren Rahmen umfasst, in dem der Prüfkopf einen definierten und konstanten Spalt *von 0,1 bis 5* mm zur Oberfläche des Prüfkörpers bildend zurückversetzt zur Auflagefläche des Rahmens angeordnet ist, wobei das Koppelmittel dem Spalt über eine im Rahmen angeordnete, während des Prüfvorganges mindestens die gesamte zu benetzende aktivierbare Schwingerfläche des Prüfkopfes mit Koppelmittel erfassenden Eintrittsöffnung *in 6-Uhr Position* während der Prüfung kontinuierlich und den Spalt von unten nach oben vollständig füllend, zuführbar und über mindestens eine Austrittsöffnung *in 12- Uhr-Position* aus der Vorrichtung das Koppelmittel wieder abführbar ist.

Vorteilhaft ist diese Vorrichtung für Prüfköpfe mit Schwingerflächen von mindestens 10 oder mehr als 20 cm² anwendbar, da sich hier die dargestellte Problematik der Ankopplung großer Schwinger- oder Prüfkopfflächen besonders zeigt.

Während bei der bekannten Ultraschallprüfung von Hand mit kleinen Prüfköpfen von weniger als 5 cm² Prüfkopffläche der Prüfkopf plan auf die mit Koppelmittel benetzte Prüfkörperoberfläche aufgesetzt und bewegt werden kann, ist bei der erfindungsgemäßen Vorrichtung für größere Prüfkopfflächen ein fest definierter mit Koppelmittel vollständig zu füllender Spalt zwischen Prüfkopf und Prüfkörperoberfläche vorgesehen. Dabei ist der Prüfkopf in einem Rahmen fixiert und relativ zur Auflagefläche des Rahmens auf der Prüfkörperoberfläche einen definierten Spalt bildend zurückversetzt angeordnet. Dadurch, dass nur der Rahmen und nicht der Prüfkopf plan auf der Prüfkörperoberfläche aufliegt, kann durch den erfindungsgemäß vorgesehenen Spalt der im Rahmen befindliche Prüfkopf problemlos und ohne großen Kraftaufwand über die Prüfkörperoberfläche von Hand oder automatisiert geführt werden.

Dazu ist die Spalthöhe erfindungsgemäß auf ein Maß von 0,1 mm bis 5 mm beschränkt. Bewährt hat sich ein Mindestspaltmaß von 0,1 mm, um Adhäsionskräfte zwischen Prüfkopf und Prüfkörperoberfläche zu minimieren.

Andererseits ist die maximale Spalthöhe mit 5 mm aber nicht so groß, dass übermäßig viel Koppelmittel während der Prüfung zugeführt werden muss, so dass große Pumpenleistungen und große Vorratsbehälter für das Koppelmittel nicht benötigt werden. Zudem wird bei zu großen zu füllenden Spalten die blasenfreie Zuführung des Koppelmittels zunehmend schwierig.

Die im Sinne einer möglichst hohen Prüfempfindlichkeit optimal einzustellende Spalthöhe innerhalb der vorgegebenen Grenzen ist abhängig von Prüfkopfparametern, wie Frequenz, dem zu verwendenden Koppelmittel und der Oberflächenqualität des Prüfkörpers.

Beispielsweise sollten bei höheren Frequenzen (ab ca. 5 MHz) tendenziell kleinere Spalte, bei Koppelmittel mit höherer Viskosität (z.B. Öl anstatt Wasser) tendenziell größere Spalte gewählt werden. Ebenso sollte bei Oberflächen mit größerer Rauigkeit oder Unebenheiten der Spalt innerhalb der oben angegebenen Grenzen größer gewählt werden, um den Prüfkopf vor mechanischen Beschädigungen zu schützen.

Um unklare Echosignale oder einen Einbruch der Echosignale zu vermeiden, sollte die Spalthöhe über der Prüfkopfoberfläche, wie Versuche gezeigt haben, nur maximal innerhalb einer Toleranz von 0,1 mm schwanken.

Eine blasenfreie Zuführung des Koppelmittels in den Spalt und damit eine blasenfreie Ankopplung des Prüfkopfes an die Prüfkörperoberfläche wird erfindungsgemäß dadurch realisiert, dass das Koppelmittel über den Rahmen nicht an einer Stelle des Prüfkopfes punktuell sondern mindestens über die gesamte zu benetzende aktivierbare Schwingerfläche des Prüfkopfes mittels einer schlitzförmigen Düse oder mehrerer über den gesamten Prüfkopfquerschnitt verteilter Ringdüsen in den Spalt hineingeführt wird und zwar in einer solchen Menge, dass der Spalt zwischen Prüfkopf und Prüfkörperoberfläche vollständig mit Koppelmittel gefüllt wird . Hierdurch wird sichergestellt, dass die im Spalt vorhandene Luft komplett verdrängt wird. Die Zuführung des Koppelmittels in den Rahmen kann je nach Menge des zuzuführenden Koppelmittels über eine oder mehrere Anschlussstellen am Rahmen erfolgen.

Um das Verfahren der Vorrichtung bzw. das Gleiten des Rahmens auf der Prüfkörperoberfläche während der Prüfung zu verbessern, ist erfindungsgemäß vorgesehen, dass der Rahmen aus einem auf der Prüfkörperoberfläche gleitfähigem Kunststoff, wie zum Beispiel Vulkollan^{®}, besteht.

Um die Gleitfähigkeit des Rahmens auf der Prüfkörperoberfläche weiter zu verbessern, ist erfindungsgemäß vorgesehen, das aus dem Spalt wieder abgeführte Koppelmittel gezielt der Kontaktebene von Rahmen und Prüfkörperoberfläche zuzuführen. Eine entsprechende Koppelmittelzuführung kann z.B. über in den Rahmen in Richtung der Kontaktebene eingebrachte Bohrungen erfolgen.

In einer weiteren vorteilhaften Ausgestaltung der Erfindung ist vorgesehen, dass in der Kontaktebene von Rahmen und Prüfkörperoberfläche rahmenseitig ein abdichtendes Mittel, z.B. eine Dichtschnur aus Kunststoff, angeordnet ist.

Der Rahmen selbst kann unterschiedliche geometrische Formen aufweisen und ist vorteilhaft an die Geometrie des Prüfkopfes bzw. des zu prüfenden Werkstücks angepasst. Der Rahmen kann beispielsweise kreisrund, rechteckig oder quadratisch als ringförmig geschlossener oder offener Querschnitt ausgeführt sein.

Desweiteren ist erfindungsgemäß vorgesehen, dass der Rahmen aus einem einzigen Segment oder aus montagetechnischen Gründen vorteilhaft aus mehreren verbindbaren Teilsegmenten bestehen kann. Die Verbindung kann beispielsweise mittels Schrauben hergestellt werden.

Je nach Größe des zu füllenden Spaltvolumens kann der Rahmen erfindungsgemäß zwei oder mehr Zuführungen für das Koppelmedium aufweisen, um eine ausreichende Füllung des Spaltes mit Koppelmittel während der Prüfung sicherzustellen.

Den speziellen Problemen bei der Ultraschallprüfung an senkrechten Prüfflächen bei ferromagnetischen Prüfkörpern, aber nicht auf die Prüfung an senkrechten Prüfflächen beschränkt, wird vorteilhaft dadurch begegnet, dass der auf der Prüfkörperoberfläche aufliegende Rahmen der Prüfvorrichtung mit haftenden Magneten versehen ist. Die Anzahl der Magnete und deren Haltekraft an der Prüfkörperoberfläche muss einerseits so groß sein, dass die Vorrichtung an der vorgesehenen Position selbstständig haften bleibt, andererseits aber ein Verfahren der Vorrichtung von Hand oder automatisiert über die Prüfkörperoberfläche ohne großen Kraftaufwand möglich ist.

In einer vorteilhaften Weiterbildung der Erfindung ist weiterhin vorgesehen, dass die Magnete je nach Anzahl und Größe im Rahmen selbst und/oder an der Außenseite des Rahmens, z.B. an daran befestigten Halterungen, angeordnet sein können.

Eine Anordnung der Magnete an der Außenseite des Rahmens ist vorteilhaft, da bei einem Rahmen, der aus einem leicht biegsamen Kunststoff besteht, die Druckverteilung der Magnetkräfte auf den auf dem Prüfkörper aufliegenden Rahmen gleichmäßiger eingestellt werden kann. Hierzu ist deshalb vorteilhaft vorgesehen, dass der Höhenabstand der Halterungen zur Prüfkörperoberfläche und damit die Haltekraft der Magnete einstellbar sind.

Versuche haben gezeigt, dass bei ungleichmäßigem Anpressdruck der Rahmen geringfügige Durchbiegungen erfährt, die sich auf die Höhe des Spaltes an dieser Stelle des Prüfkopfes und damit auf das Messergebnis auswirken können.

Vorteilhaft wirken deshalb sowohl innerhalb des Rahmens fest eingebaute und außerhalb des Rahmens einstellbare Magnete zusammen.

Zur Sicherstellung einer blasenfreien Ankopplung des Prüfkopfes an die Prüfkörperoberfläche bei senkrechter Prüfung ist außerdem erfindungsgemäß vorgesehen, dass die Zuführung des Koppelmittels in den Spalt über den in 6-Uhr-Position befindlichen Rahmenabschnitt erfolgt und über eine Öffnung des Rahmenabschnitts in 12-Uhr-Position abgeführt wird. Nur bei einer Koppelmittelzuführung in 6-Uhr-Position und einer Abführung des Koppelmittels in 12-Uhr-Position kann sichergestellt werden, dass die im Spalt befindliche Luft bei einer Befüllung des Spaltes mit Koppelmittel von unten nach oben vollständig verdrängt wird.

Der Pumpendruck wird dabei vorteilhaft so eingestellt, dass einerseits über einen Mindestdruck eine ausreichende Füllung des Spaltes mit Koppelmittel gewährleistet ist, andererseits darf der Druck auch nicht so groß werden, dass sich der Rahmen der Prüfvorrichtung von der Prüfkörperoberfläche abhebt. Entsprechend muss auch die Haltekraft der Magnete an der Prüfkörperoberfläche ausgelegt sein.

Für eine ausreichende und kontinuierliche Füllung des Spaltes mit Koppelmittel und für die Zu- und Abführung des Koppelmittels wird das Koppelmittel mittels einer Pumpe in einem offenen oder vorteilhaft geschlossenen Kreislauf geführt. Das von der Prüfkörperoberfläche und aus dem Spalt ablaufende Koppelmittel wird dazu beispielsweise in einer Wanne aufgefangen und der Prüfvorrichtung bzw. dem Spalt wieder zugeführt.

Als Koppelmittel für die Ultraschallprüfung können beispielsweise Wasser, Öl oder Emulsionen verwendet werden. Gerade bei großen Prüfkopfflächen aus Stahl bietet sich vorteilhaft die Verwendung von Öl als Koppel- und gleichzeitig als Korrosionsschutzmittel an.

Einerseits wird durch die Schmierwirkung des Öls ein Verschieben des Prüfkopfes auf der Prüfkörperoberfläche deutlich erleichtert und der dafür erforderliche Kraftaufwand reduziert, anderseits wird dabei gleichzeitig die Prüfkörperoberfläche zumindest temporär vor Korrosion geschützt.

In einer weiteren vorteilhaften Ausgestaltung der Erfindung ist vorgesehen, dass der Prüfkopf mit einem eine schräge Einschallung des Schalls in den Prüfkörper realisierenden Vorlaufkeil als Zwischenstück versehen ist, welcher ebenfalls mit Koppelmittel fest an der aktiven Oberfläche des Prüfkopfes angeschlossen ist. Dabei übernimmt die Schallaustrittsfläche aus dem Zwischenstück die Rolle der bisherigen Schallaustrittsfläche aus dem Prüfkopf, so dass Vorlaufkeil und Prüfkopf eine Einheit bilden.

Wenngleich die erfindungsgemäße Vorrichtung bevorzugt zur Prüfung metallischer Körper, z.B. aus Stahl, Anwendung findet, ist sie jedoch nicht eingeschränkt hierauf. Vorstellbar sind mit dieser Vorrichtung auch Prüfungen an Prüfkörpern z.B. aus Kunststoff oder anderen nichtmetallischen Werkstoffen.

Weitere Merkmale, Vorteile und Einzelheiten der Erfindung ergeben sich aus der nachfolgenden Beschreibung eines in einer Zeichnung dargestellten Ausführungsbeispiels.

Es zeigen:
- **Figur 1:**: schematische Darstellung eines rechteckigen Phased-Array-Prüfkopfes zur Prüfung eines langgestreckten Werkstücks in Längsrichtung in einer Draufsicht
- **Figur 2:**: schematische 3-D Darstellung der erfindungsgemäßen Prüfvorrichtung
- **Figur 3:**: schematische Darstellung einer erfindungsgemäßen Prüfvorrichtung im Querschnitt aufgesetzt auf eine Prüfkörperoberfläche,

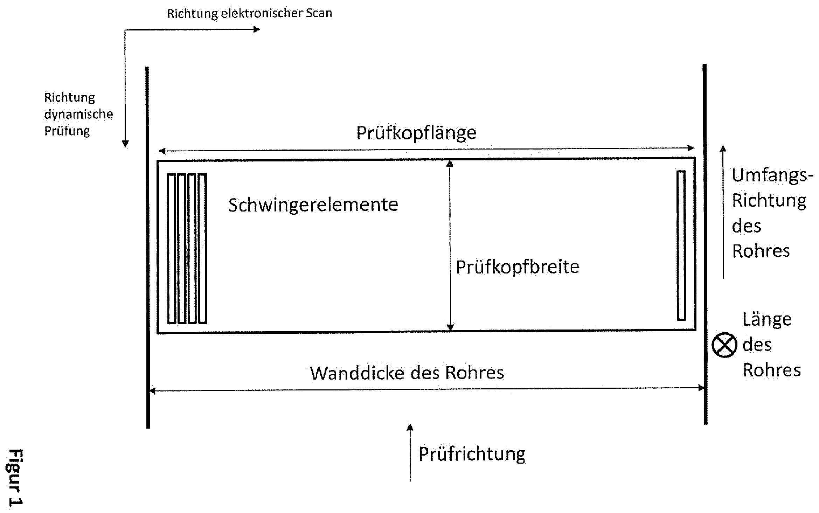

**Figur 1** zeigt eine schematische Darstellung eines rechteckigen Phased-Array-Prüfkopfes zur Prüfung eines langgestreckten Werkstücks in Längsrichtung in einer Draufsicht.

Als Beispiel ist hier ausschnittweise ein sehr dickwandiges Rohr mit einer Wanddicke von beispielsweise 200 mm, einem Durchmesser vom 1800 mm und einer Länge von 7000 mm dargestellt, welches stirnseitig über den gesamten stirnseitigen Umfang in Längsrichtung des Rohres ultraschallgeprüft werden soll.

Um die Prüfung wirtschaftlich zu gestalten und eine ausreichende Ultraschallleistung in das Rohr über die gesamte Länge einkoppeln zu können, ist in diesem Beispiel ein sehr großflächiger rechteckiger Prüfkopf mit einer Länge von 20 cm und einer Breite von 8 cm, also einer Prüfkopffläche von 160 cm² vorgesehen. Die Prüfkopffläche entspricht hierbei der aktivierbaren Schwingerfläche. Der Prüfkopf ist über die Länge mit mehr als 32 Schwingerelementen bestückt, wobei die Länge des Prüfkopfes dabei annähernd der Wanddicke des zu prüfenden Rohres entspricht, so dass mittels Schallbündelschwenkung mit nur einer 360° Prüfung in Umfangsrichtung (s. Pfeilrichtung dynamische Prüfung), das Rohr über den gesamten stirnseitigen Umfang und über die gesamte Länge geprüft werden kann.

Die Prüfung erfolgt über einen elektronischen Scan (s. Pfeilrichtung elektronischer Scan), indem einzelne Gruppen von Schwingern des Phased-Array-Prüfkopfes einzeln angesteuert werden, wodurch das Schwenken des Schallstrahls unter kleinen Winkeln möglich ist, um so die Prüfung im gesamten Volumen des Prüfkörpers sicherzustellen.

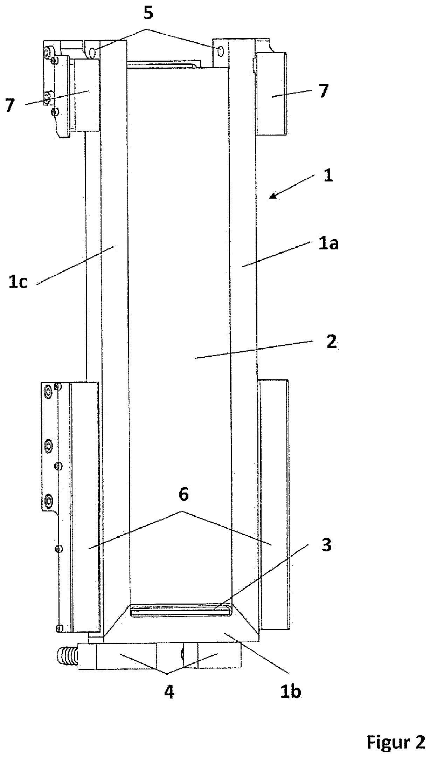

**Figur 2** zeigt schematisch eine erfindungsgemäße Ultraschall Prüfvorrichtung in 3-D Darstellung zur Prüfung an senkrechten Flächen, die besonders zur Prüfung langgestreckter großvolumiger Prüfkörper, wie z.B. an Stirnflächen von Rohren, geeignet ist. Hierbei liegt das Rohr waagerecht, z.B. auf einer Ablage mit drehbaren Rollen, wobei die Prüfvorrichtung stationär vor der Stirnfläche des zu prüfenden Rohres montiert ist und das Rohr während der Prüfung in Rotation versetzt wird. Alternativ ist es natürlich auch möglich, dass die Prüfvorrichtung über die Stirnfläche des feststehenden Rohrs rotiert.

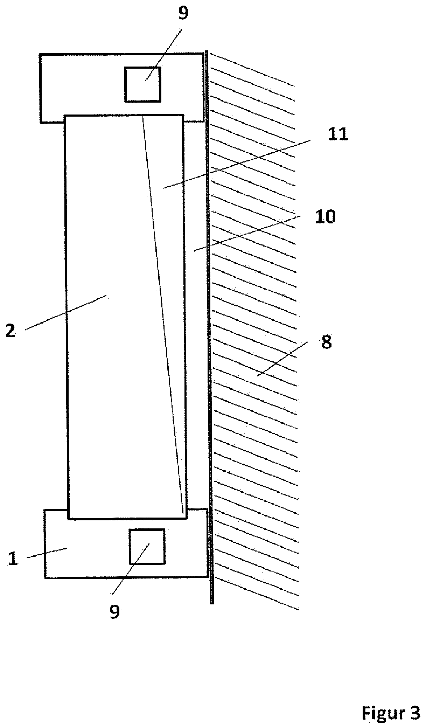

Die Prüfvorrichtung besteht aus einem rechteckigen Prüfkopf **2** mit einer gemäß **Figur 1** zeilenförmigen Anordnung von Schwingerelementen in Phased-Array-Technik, bei der der Prüfkopf **2** in einem über die Oberfläche eines Prüfkörpers **8** (s. **Figur 3**) verfahrbaren Gehäuse angeordnet ist.

Das Gehäuse umfasst einen auf der Prüfkörperoberfläche aufsetzbaren U-förmigen Rahmen **1,** in dem der Prüfkopf **2** einen definierten Spalt **10** (s. **Figur 3**) zur Prüfkörperoberfläche bildend zurückversetzt zur Auflagefläche des Rahmens **1** fluiddicht angeschlossen ist. Der U-förmige Rahmen **1** besteht aus drei Teilsegmenten **1a, 1b, 1c,** die lösbar mittels hier nicht dargestellter Schrauben miteinander verbunden sind.

Um ein unkontrolliertes Auslaufen von Koppelmittel aus dem Rahmen **1** während der Ultraschallprüfung zu vermeiden, wird der Rahmen **1** mit dem Prüfkopf **2** so auf die Oberfläche des Prüfkörpers aufgesetzt, dass das untere Teilsegment **1b** des Rahmens **1** sich in 6-Uhr-Position und der nach oben offene Teil des Rahmens **1** sich 12-Uhr-Position auf der Oberfläche des Prüfkörpers **8** befindet.

Um bei senkrechter Prüfung eine blasenfreie Ankopplung des Prüfkopfes **2** an die Oberfläche des Prüfkörpers **8** (s. **Figur 3**) sicherzustellen, wird das Koppelmittel dem Spalt **10** über eine in 6-Uhr-Position befindliche schlitzdüsenartige Eintrittsöffnung **3** im Teilsegment **1b** des Rahmens **1** zugeführt und in 12-Uhr-Position an den Enden der Teilsegmente **1a, 1c** des Rahmens **1** über Austrittsöffnungen **5** aus dem Spalt **10** wieder abgeführt. Die schlitzdüsenartige Eintrittsöffnung **3** für das Koppelmittel in den Spalt **10** ist so breit, dass sie die komplette Breite der aktivierbaren Schwingerfläche mit Koppelmittel überdecken kann, um so die im Spalt **10** vorhandene Luft vollständig hieraus zu verdrängen.

Das Koppelmittel wird dem Spalt **10** über eine im Rahmen **1** angeordnete, den gesamten Querschnitt des Prüfkopfes **2** mit Koppelmittel erfassenden Eintrittsöffnung **3** zugeführt. Dazu erstreckt sich die in diesem Fall schlitzartige Eintrittsöffnung **3** über die gesamte zu benetzende aktivierbare Schwingerfläche des Prüfkopfes **2,** so dass während der Prüfung kontinuierlich und den Spalt **10** vollständig füllend Koppelmittel durch im Querteil des Teilsegments **1b** des Rahmens **1** angeordnete Zuführstellen **4** zugeführt werden kann. Anstatt einer einzelnen schlitzdüsenartigen Eintrittsöffnung **3** im Teilsegment **1b** des Rahmens **1** können auch mehrere ringdüsenartige Öffnungen vorgesehen sein. Wesentlich ist aber in jedem Fall, dass das Koppelmittel dem Spalt **10** über die Eintrittsöffnung **3** so zugeführt wird, dass mindestens die gesamte Breite der aktivierbaren Schwingerfläche vom Koppelmittel erfasst und benetzt wird. Nicht dargestellt sind hier die Zuführ- und Abflussleitungen für das Koppelmittel, sowie ein Auffangbehälter für das Koppelmittel und eine Pumpe zur Förderung des Koppelmittels in einem geschlossenen Kreislauf.

Zur Realisierung einer ausreichenden Haltekraft der Prüfvorrichtung, insbesondere an einer senkrechten ferromagnetischen Prüfkörperoberfläche, ist der Rahmen **1** außenseitig mit auf der Oberfläche des Prüfkörpers **8** haftenden Magneten **6, 7** versehen. Zusätzlich sind die einzelne Magnete **6, 7** in Bezug zur Oberfläche des Prüfkörpers **8** höhenverstellbar ausgeführt, um die Haltekraft der Magnete **6, 7** variabel einstellen und die Druckverteilung des Rahmens **1** auf die Oberfläche des Prüfkörpers **8** vergleichmäßigen zu können.

Die Anzahl der Magnete **6, 7** am Rahmen **1** und deren Haltekraft an der Oberfläche des Prüfkörpers **8** ist dabei so bemessen bzw. einstellbar, dass die Vorrichtung an der vorgesehenen Position der Prüfkörperoberfläche selbstständig haften bleibt, andererseits aber ein Verschieben der Vorrichtung von Hand oder automatisiert über die Prüfkörperoberfläche ohne großen Kraftaufwand möglich ist.

In **Figur 3** ist noch einmal die erfindungsgemäße Prüfvorrichtung im Querschnitt schematisch an einer senkrechten Prüfkörperoberfläche dargestellt. Die Prüfvorrichtung ist zur Prüfung auf den Prüfkörper **8** aufgesetzt, wobei der Prüfkopf **2** einen Spalt **10** bildend zurückversetzt im Rahmen **1** angeordnet ist. An dem Prüfkopf 2 ist erfindungsgemäß in diesem Beispiel ein Vorlaufkeil als Zwischenstück **11** angeordnet, um eine Winkeleinschallung in den Prüfkörper **8** zu realisieren. Nicht dargestellt sind in dieser Zeichnung die Zu- und Abführstellen für das Koppelmittel. Aus dieser Schnittdarstellung wird ersichtlich, dass auch im Rahmen **1** Haltemagnete **9** angeordnet sind, die gemeinsam mit den in **Figur 2** gezeigten am Rahmen **1** außen angebrachten höhenverstellbaren Magneten **6, 7** eine ausreichende Haltekraft am Prüfkörper **8** ermöglichen.

**Bezugszeichenliste**

| **Nr.** | | **Bezeichnung** |
|---|---|---|
| | 1 | Rahmen |
| | 1a, 1b, 1c | Teilsegmente des Rahmens |
| | 2 | Prüfkopf |
| | 3 | Eintrittsöffnung |
| | 4 | Zuführstelle |
| | 5 | Austrittsöffnung |
| | 6, 7 | Magnete |
| | 8 | Prüfkörper |
| | 9 | Magnete |
| | 10 | Spalt |
| | 11 | Zwischenstück (Vorlaufkeil) |

## Patentansprüche

1. Vorrichtung zur Ultraschallprüfung von Prüfkörpern, insbesondere aus Metall, mit einem Prüfkopf (2) mit einer Anordnung von aktivierbaren Schwingerelementen in Phased-Array-Technik, wobei der Prüfkopf eine aktivierbare Schwingerfläche von mehr als 10 cm² aufweist, wobei der Prüfkopf (2) in einem über die Oberfläche des Prüfkörpers (8) verfahrbaren Gehäuse angeordnet ist und ein Koppelmittel zur Ankopplung des Prüfkopfes (2) an die Oberfläche des Prüfkörpers (8) zwischen Prüfkopf (2) und Oberfläche des Prüfkörpers (8) zuführbar ist, wobei für eine blasenfreie Ankopplung des Prüfkopfes (2) an die Oberfläche des Prüfkörpers (8) bei senkrechter Prüfung das Gehäuse einen auf der Oberfläche des Prüfkörpers (8) aufsetzbaren Rahmen (1) umfasst, in dem der Prüfkopf (2) einen definierten und konstanten Spalt (10) von 0,1 bis 5 mm zur Oberfläche des Prüfkörpers (8) bildend zurückversetzt zur Auflagefläche des Rahmens (1) angeordnet ist, wobei das Koppelmittel dem Spalt (10) über eine im Rahmen (1) angeordnete, während des Prüfvorganges mindestens die gesamte zu benetzende aktivierbare Schwingerfläche des Prüfkopfes (2) mit Koppelmittel erfassenden Eintrittsöffnung (3) in 6-Uhr-Position während der Prüfung kontinuierlich und den Spalt (10) von unten nach oben vollständig füllend zuführbar und über mindestens eine Austrittsöffnung (5) in 12-Uhr-Position aus der Vorrichtung das Koppelmittel wieder abführbar ist.

2. Vorrichtung nach Anspruch 1
**dadurch gekennzeichnet,**
**dass** die Eintrittsöffnung (3) des Rahmens (1) für das Koppelmittel in den Spalt (10) aus einer schlitzartigen Düse besteht.

3. Vorrichtung nach Anspruch 1,
**dadurch gekennzeichnet,**
**dass** die Eintrittsöffnung (3) des Rahmens (1) für das Koppelmittel in den Spalt (10) aus mehreren ringförmigen Düsen besteht.

4. Vorrichtung nach den Ansprüchen 1 bis 3,
**dadurch gekennzeichnet,**
**dass** die Eintrittsöffnung (3) sich über den gesamten Querschnitt des Prüfkopfes (2) erstreckt.

5. Vorrichtung nach den Ansprüchen 1 bis 4,
**dadurch gekennzeichnet,**
**dass** der Rahmen (1) aus einem auf der Oberfläche des Prüfkörpers (8) gleitfähigen Kunststoff besteht.

6. Vorrichtung nach den Ansprüchen 1 bis 5,
**dadurch gekennzeichnet,**
**dass** in der Kontaktebene zwischen Rahmen (1) und Oberfläche des Prüfkörpers (8) rahmenseitig ein abdichtendes Mittel angeordnet ist.

7. Vorrichtung nach den Ansprüchen 1 bis 6,
**dadurch gekennzeichnet,**
**dass** die Geometrie des Rahmens (1) an die jeweilige Geometrie des Prüfkopfes (2) angepasst kreisrund, rechteckig oder quadratisch als geschlossener ringförmiger oder offener Querschnitt ausgeführt ist.

8. Vorrichtung nach den Ansprüchen 1 bis 7,
**dadurch gekennzeichnet,**
**dass** der Rahmen (1) aus einem einzigen Segment oder mehreren verbindbaren Teilsegmenten (1a, 1b, 1c) besteht.

9. Vorrichtung nach den Ansprüchen 1 bis 8,
**dadurch gekennzeichnet,**
**dass** der Rahmen (1) mindestens zwei Zuführstellen (4) für das Koppelmedium aufweist.

10. Vorrichtung nach den Ansprüchen 1 bis 9,
**dadurch gekennzeichnet,**
**dass** bei einem Einsatz des Prüfkopfes (2) an senkrecht zu prüfenden Flächen eines ferromagnetischen Prüfkörpers (8) der Rahmen (1) mit auf der Oberfläche des Prüfkörpers (8) haftenden Magneten (6, 7, 9) versehen ist.

11. Vorrichtung nach Anspruch 10,
**dadurch gekennzeichnet,**
**dass** die Magnete (9) im Rahmen (1) selbst und/oder die Magnete (6, 7) an der Außenseite des Rahmens (1) angeordnet sind.

12. Vorrichtung nach Anspruch 11,
**dadurch gekennzeichnet,**
**dass** die an der Außenseite des Rahmens (1) angeordneten Magnete (6, 7) in Bezug zur Oberfläche des Prüfkörpers (8) höhenverstellbar ausgeführt sind.

13. Vorrichtung nach den Ansprüchen 1 bis 12,
**dadurch gekennzeichnet,**
**dass** an der Zuführstelle (4) des Koppelmittels in den Rahmen (1) ein das Koppelmittel mit Druck beaufschlagendes Mittel angeschlossen ist.

14. Vorrichtung nach Anspruch 13,
**dadurch gekennzeichnet,**
**dass** das Druck beaufschlagende Mittel eine Pumpe ist.

15. Vorrichtung nach einem der Ansprüche 1 bis 14,
**dadurch gekennzeichnet,**
**dass** die Koppelmittelzuführung in den Spalt (10) der Vorrichtung und die Koppelmittelabführung aus dem Spalt (10) der Vorrichtung heraus als geschlossener Kreislauf ausgeführt sind.

16. Vorrichtung nach Anspruch 15,
**dadurch gekennzeichnet,**
**dass** der Prüfkopf eine aktivierbare Schwingerfläche von mehr als 20 cm² aufweist.

17. Vorrichtung nach einem der Ansprüche 1 bis 16,
**dadurch gekennzeichnet,**
**dass** an der Prüfkopfoberfläche ein eine schräge Einschallung des Schalls in den Prüfkörper realisierendes Zwischenstück (11) angeordnet ist.

18. Vorrichtung nach Anspruch 17,
**dadurch gekennzeichnet,**
**dass** das Zwischenstück (11) einen Keilwinkel von bis zu 70° aufweist.

## Claims

1. Device for ultrasonic testing of test bodies, in particular made of metal, having a probe (2) with an arrangement of activatable oscillation elements in phased-array technology, the probe having an activatable oscillation face of more than 10 cm², the probe (2) being disposed in a housing which can be moved over the surface of the test body (8), and a coupling means for coupling the probe (2) to the surface of the test body (8) can be supplied between probe (2) and surface of the test body (8), the housing comprising a frame (1) which can be placed on the surface of the test body (8) in the case of vertical testing, for a bubble-free coupling of the probe (2) to the surface of the test body (8), and in which the probe (2) is disposed offset relative to the support face of the frame (1) forming a defined and constant gap (10) of 0.1 to 5 mm relative to the surface of the test body (8), the coupling means being able to be supplied to the gap (10) via an entry opening (3) which is disposed in the frame (1) and, during the testing procedure, detects at least the entire activatable oscillation face of the probe (2) to be wetted with coupling means, in 6 o'clock position during the testing continuously and completely filling the gap (10) from bottom to top, and the coupling means being able to be discharged again from the device via at least one exit opening (5) in 12 o'clock position.

2. Device according to claim 1,
**characterised in that**
the entry opening (3) of the frame (1) for the coupling means into the gap (10) consists of a slot-like nozzle.

3. Device according to claim 1,
**characterised in that**
the entry opening (3) of the frame (1) for the coupling means into the gap (10) consists of a plurality of annular nozzles.

4. Device according to claims 1 to 3,
**characterised in that**
the entry opening (3) extends over the entire cross-section of the probe (2).

5. Device according to claims 1 to 4,
**characterised in that**
the frame (1) consists of plastic material which can slide on the surface of the test body (8).

6. Device according to claims 1 to 5,
**characterised in that**
a sealing means is disposed in the contact plane between frame (1) and surface of the test body (8) on the frame side.

7. Device according to claims 1 to 6,
**characterised in that**
the geometry of the frame (1), adapted to the respective geometry of the probe (2), is configured in a circular, rectangular or quadratic manner as a closed annular or open cross-section.

8. Device according to claims 1 to 7,
**characterised in that**
the frame (1) consists of a single segment or a plurality of partial segments (1a, 1b, 1c) which can be connected.

9. Device according to claims 1 to 8,
**characterised in that**
the frame (1) has at least two supply positions (4) for the coupling medium.

10. Device according to claims 1 to 9,
**characterised in that**,
during use of the probe (2) on faces of a ferromagnetic test body (8) to be tested vertically, the frame (1) is provided with magnets (6, 7, 9) which adhere to the surface of the test body (8).

11. Device according to claim 10,
**characterised in that**
the magnets (9) are disposed in the frame (1) itself and/or the magnets (6, 7) are disposed on the outside of the frame (1).

12. Device according to claim 11,
**characterised in that**
the magnets (6, 7) disposed on the outside of the frame (1) are configured adjustable in height relative to the surface of the test body (8).

13. Device according to claims 1 to 12,
**characterised in that**
a means applying pressure to the coupling means is connected to the supply position (4) of the coupling means in the frame (1).

14. Device according to claim 13,
**characterised in that**
the means applying pressure is a pump.

15. Device according to one of claims 1 to 14,
**characterised in that**
the coupling means supply into the gap (10) of the device and the coupling means discharge from the gap (10) of the device are configured as a closed circuit.

16. Device according to claim 15,
**characterised in that**
the probe has an activatable oscillation face of more than 20 cm².

17. Device according to one of claims 1 to 16,
**characterised in that**
an intermediate part (11) producing a diagonal insonification of the sound into the test body is disposed on the probe surface.

18. Device according to claim 17,
**characterised in that**
the intermediate part (11) has a wedge angle of up to 70°.

## Revendications

1. Dispositif de vérification par ultrasons d'éprouvettes, en particulier en métal, avec une sonde (2) avec un agencement d'éléments de vibration activables dans la technique à réseau piloté en phase, dans lequel la sonde présente une surface de vibration activable de plus de 10 cm², dans lequel la sonde (2) est agencée dans un boîtier déplaçable sur la surface de l'éprouvette (8) et un moyen de couplage pour le couplage de la sonde (2) avec la surface de l'éprouvette (8) peut être amené entre la sonde (2) et la surface de l'éprouvette (8), dans lequel pour un couplage sans bulles de la sonde (2) avec la surface de l'éprouvette (8) pour la vérification verticale, le boîtier comporte un cadre (1) pouvant être placé sur la surface de l'éprouvette (8), dans lequel la sonde (2) est agencée en formant une fente (10) définie et constante de 0,1 à 5 mm à la surface de l'éprouvette (8) en retrait de la surface d'appui du cadre (1), dans lequel le moyen de couplage peut être amené à la fente (10) par le biais d'une ouverture d'entrée (3) détectant pendant le procédé de vérification au moins la surface de vibration entière activable agencée dans le cadre (1), à humidifier de la sonde (2) avec le moyen de couplage en continu dans la position 6 heures pendant la vérification et remplissant complètement la fente (10) de bas en haut et le moyen de couplage peut de nouveau être évacué par le biais d'au moins une ouverture de sortie (5) dans la position 12 heures hors du dispositif.

2. Dispositif selon la revendication 1,
**caractérisé en ce**
**que** l'ouverture d'entrée (3) du cadre (1) pour le moyen de couplage dans la fente (10) se compose d'une buse de type fente.

3. Dispositif selon la revendication 1,
**caractérisé en ce**
**que** l'ouverture d'entrée (3) du cadre (1) pour le moyen de couplage dans la fente (10) se compose de plusieurs buses annulaires.

4. Dispositif selon les revendications 1 à 3,
**caractérisé en ce**
**que** l'ouverture d'entrée (3) s'étend sur la section transversale entière de la sonde (2).

5. Dispositif selon les revendications 1 à 4,
**caractérisé en ce**
**que** le cadre (1) se compose d'une matière plastique glissante sur la surface de l'éprouvette (8).

6. Dispositif selon les revendications 1 à 5,
**caractérisé en ce**
**que** dans le plan de contact entre le cadre (1) et la surface de l'éprouvette (8) un moyen d'étanchéité est agencé côté cadre.

7. Dispositif selon les revendications 1 à 6,
**caractérisé en ce**
**que** la géométrie du cadre (1) est réalisée adaptée à la géométrie respective de la sonde (2) de manière ronde et circulaire, rectangulaire ou carrée comme section transversale annulaire fermée ou ouverte.

8. Dispositif selon les revendications 1 à 7,
**caractérisé en ce**
**que** le cadre (1) se compose d'un seul segment ou de plusieurs segments partiels reliables (1a, 1b, 1c).

9. Dispositif selon les revendications 1 à 8,
**caractérisé en ce**
**que** le cadre (1) présente au moins deux points d'alimentation (4) pour le milieu de couplage.

10. Dispositif selon les revendications 1 à 9,
**caractérisé en ce**
**que** lors d'une utilisation de la sonde (2) sur des surfaces à vérifier perpendiculairement d'une éprouvette (8) ferromagnétique, le cadre (1) est pourvu d'aimants (6, 7, 9) collant à la surface de l'éprouvette (8).

11. Dispositif selon la revendication 10,
**caractérisé en ce**
**que** les aimants (9) sont agencés dans le cadre (1) même et/ou les aimants (6, 7) sont agencés sur le côté extérieur du cadre (1).

12. Dispositif selon la revendication 11,
**caractérisé en ce**
**que** les aimants (6, 7) agencés sur le côté extérieur du cadre (1) sont réalisés de manière réglable en hauteur par rapport à la surface de l'éprouvette (8).

13. Dispositif selon les revendications 1 à 12,
**caractérisé en ce**
**qu'**un moyen alimentant en pression le moyen de couplage est raccordé au point d'alimentation (4) du moyen de couplage dans le cadre (1).

14. Dispositif selon la revendication 13,
**caractérisé en ce**
**que** le moyen alimentant en pression est une pompe.

15. Dispositif selon l'une quelconque des revendications 1 à 14,
**caractérisé en ce**
**que** l'alimentation en moyen de couplage dans la fente (10) du dispositif et l'évacuation du moyen de couplage hors de la fente (10) du dispositif sont réalisées comme circuit fermé.

16. Dispositif selon la revendication 15,
**caractérisé en ce**
**que** la sonde présente une surface de vibration activable de plus de 20 cm².

17. Dispositif selon l'une quelconque des revendications 1 à 16,
**caractérisé en ce**
**qu'**une pièce intermédiaire (11) réalisant une réfraction oblique du son dans l'éprouvette est agencée sur la surface de sonde.

18. Dispositif selon la revendication 17,
**caractérisé en ce**
**que** la pièce intermédiaire (11) présente un angle de calage jusqu'à 70°.
